# EUROPEAN PATENT APPLICATION

(11) **EP 4 386 517 A1**
(43) Date of publication of application: **19.06.2024**
(21) Application number: 21957176.7
(22) Date of filing: 18.09.2021
(51) Int. Cl.: G06F 1/32, G06F 12/02

(54) **METHOD FOR STORING DATA IN STORAGE DEVICE AND STORAGE DEVICE**

(71) Applicant: Huawei Technologies Co., Ltd., Shenzhen, Guangdong 518129 (CN)
(72) Inventor: TAN, Zhenghua, Shenzhen, Guangdong 518129 (CN); XIA, Jiaqiang, Shenzhen, Guangdong 518129 (CN); SHENG, Qiang, Shenzhen, Guangdong 518129 (CN); MAO, Gangpin, Shenzhen, Guangdong 518129 (CN)
(74) Representative: Gill Jennings & Every LLP
(86) International application number: PCT/CN2021/119431
(87) International publication number: WO 2023/039899

(57) **Abstract**

A method for storing data in a storage device and a storage device are provided, to expand storage space of data in a low power consumption mode of the storage device, and improve performance of the storage device. Specifically, the method includes: A controller in a storage device receives first indication information sent by a host, where the first indication information indicates the storage device to enter a low power consumption mode; the controller store first data in a first memory of the storage device into a second memory of the storage device in response to the first indication information, where the first memory is a random access memory, and the second memory is a cache; and the controller powers off a first random access memory, where the first random access memory is a part of random access memories in the first memory.

## Description

### TECHNICAL FIELD

Embodiments of this application relate to the storage field, and more specifically, to a method for storing data in a storage device and a storage device.

### BACKGROUND

A consumer storage device that uses a flash memory (NAND flash) as a persistent storage includes a controller, and the controller includes a random access memory, configured to store firmware (firmware, FW), key running data, user data, and the like. Because the consumer storage device has a high requirement on power consumption, there is a low power consumption mode. In the low power consumption mode, a retention random access memory (retention random access memory, Retention RAM) in the controller keeps power on, and a non-retention random access memory (non-retention RAM) is powered off, to reduce power consumption. A smaller retention random access memory indicates lower power consumption of the consumer storage device. However, small storage space of the retention random access memory affects a data storage manner, and further affects performance of the storage device.

### SUMMARY

Embodiments of this application provide a method for storing data in a storage device and a storage device, to expand storage space of data in a low power consumption mode of the storage device, and improve performance of the storage device.

According to a first aspect, a method for storing data in a storage device is provided. The method includes: A controller in the storage device receives first indication information sent by a host, where the first indication information indicates the storage device to enter a low power consumption mode; the controller store first data in a first memory of the storage device into a second memory of the storage device in response to the first indication information, where the first memory is a random access memory, and the second memory is a cache; and the controller powers off a first random access memory, where the first random access memory is a part of random access memories in the first memory.

The foregoing method for storing the data by using the cache is used before the storage device enters the low power consumption mode, so that storage space of the data in the low power consumption mode of the storage device is expanded, and performance of the storage device can be improved. For example, for a storage device that uses a NAND flash as a persistent storage, when the storage device enters a low power consumption mode, and a small amount of data needs to be stored, a NAND cache is used to store the data. This avoids occupying a programming unit in a NAND array for storage, to avoid a waste of a write amount of the programming unit. For another example, for a storage device that uses a NAND flash as a persistent storage, when the storage device enters a low power consumption mode, data is stored into a NAND cache, so that when the storage device exits the low power consumption mode, the data is moved back to a corresponding position from the NAND cache. This avoids reading of data from a NAND array when the storage device exits the low power consumption mode, reduces duration of exiting the low power consumption mode by the storage device, and improves performance of the storage device exiting the low power consumption mode.

With reference to the first aspect, in some implementations of the first aspect, before the controller stores the first data in the first memory of the storage device into the second memory of the storage device, the method further includes: The controller stores second data in the first memory into a third memory of the storage device, where the third memory is a non-volatile memory.

The second data in the storage device is stored into the non-volatile third memory, to avoid a case in which a data loss is caused due to unstable voltages of the first memory and the second memory when the storage device is in a low power consumption mode, and further improve performance of the storage device.

With reference to the first aspect, in some implementations of the first aspect, the method further includes: The controller stores third data in the first random access memory into a second random access memory, where the second random access memory is a part of random access memories in the first memory, and the second random access memory keeps power on when the storage device is in the low power consumption mode.

With reference to the first aspect, in some implementations of the first aspect, before the controller stores the first data in the first memory of the storage device into the second memory of the storage device, the method further includes: The controller performs error correction code ECC encoding on the first data.

The ECC encoding is performed on the data before the first data is stored. This ensures reliability of the stored data.

With reference to the first aspect, in some implementations of the first aspect, the method further includes: The controller receives second indication information sent by the host, where the second indication information indicates the storage device to exit the low power consumption mode; the controller powers on the first random access memory in response to the second indication information; and the controller stores the first data from the second memory into the first memory.

With reference to the first aspect, in some implementations of the first aspect, that the controller stores the first data from the second memory into the first memory includes: The controller performs ECC decoding check on the first data; and when the first data is correctable, the controller stores the first data from the second memory into the first memory.

With reference to the first aspect, in some implementations of the first aspect, the method further includes: The controller stores the third data from the second random access memory into the first random access memory.

With reference to the first aspect, in some implementations of the first aspect, the second memory and the third memory are different units of a same memory.

According to a second aspect, a storage device is provided. The storage device includes a storage controller and a storage array. Specifically, the storage controller is configured to receive first indication information sent by a host, where the first indication information indicates the storage device to enter a low power consumption mode; the storage controller is further configured to store first data in a first memory of the storage controller into a second memory of the storage array in response to the first indication information, where the first memory is a random access memory, and the second memory is a cache; and the storage controller is further configured to power off a first random access memory, where the first random access memory is a part of random access memories in the first memory.

With reference to the second aspect, in some implementations of the second aspect, the storage array further includes a third memory, and before the storage controller stores the first data in the first memory of the storage controller into the second memory of the storage array, the storage controller is further configured to store second data in the first memory into the third memory, where the third memory is a non-volatile memory.

With reference to the second aspect, in some implementations of the second aspect, the storage controller is further configured to store third data in the first random access memory into a second random access memory, where the second random access memory is a part of random access memories in the first memory, and the second random access memory keeps power on when the storage device is in the low power consumption mode.

With reference to the second aspect, in some implementations of the second aspect, before the storage controller stores the first data in the first memory of the storage controller into the second memory of the storage array, the storage controller is further configured to perform error correction code ECC encoding on the first data.

With reference to the second aspect, in some implementations of the second aspect, the storage controller is further configured to receive second indication information sent by the host, where the second indication information indicates the storage device to exit the low power consumption mode; the storage controller is further configured to power on the first random access memory in response to the second indication information; and the storage controller is further configured to store the first data from the second memory into the first memory.

With reference to the second aspect, in some implementations of the second aspect, the storage controller is further configured to store the first data from the second memory into the first memory, and the storage controller is specifically configured to: perform ECC decoding check on the first data; and store the first data from the second memory into the first memory.

With reference to the second aspect, in some implementations of the second aspect, the storage controller is further configured to store the third data from the second random access memory into the first random access memory. The second memory and the third memory are different units of a same memory.

With reference to the second aspect, in some implementations of the second aspect, the first data includes data that changes in a running process of the storage device and/or that does not change in the running process of the storage device.

With reference to the second aspect, in some implementations of the second aspect, the second data includes data that changes in the running process of the storage device.

With reference to the second aspect, in some implementations of the second aspect, the third data includes data that changes in the running process of the storage device and/or that does not change in the running process of the storage device.

With reference to the second aspect, in some implementations of the second aspect, the first data includes the second data.

According to a third aspect, a computer-readable storage medium is provided, where the computer-readable storage medium stores computer instructions, and when the computer instructions are run, the method in any one of the foregoing aspects and the possible implementations of any one of the aspects is performed.

According to a fourth aspect, a storage device is provided, including a memory and a processor, where the memory stores computer instructions run on the processor, and when running the computer instructions, the processor performs the method in any one of the foregoing aspects and the possible implementations of any one of the aspects.

According to a fifth aspect, a computer program product including instructions is provided. When the instructions are executed, a storage device is enabled to implement the method in any one of the foregoing aspects and the possible implementations of any one of the aspects.

According to a sixth aspect, a system is provided. The system includes the controller, the first memory, and the second memory in the first aspect. Optionally, the system may further include a third memory.

### BRIEF DESCRIPTION OF DRAWINGS

FIG. 1 is a schematic diagram of an example structure of a solid state disk SSD applicable to an embodiment of this application;
FIG. 2 is a schematic diagram of a structure of a NAND flash-based consumer storage product applicable to an embodiment of this application;
FIG. 3 is a schematic flowchart of a method for storing data in a storage device according to this application;
FIG. 4 is a schematic flowchart of another method for storing data in a storage device according to this application;
FIG. 5 is a schematic flowchart of a specific example of a method for storing data in a storage device according to an embodiment of this application;
FIG. 6 is a schematic flowchart of another specific example of a method for storing data in a storage device according to an embodiment of this application;
FIG. 7 is a schematic flowchart of another specific example of a method for storing data in a storage device according to an embodiment of this application;
FIG. 8 is a schematic flowchart of another specific example of a method for storing data in a storage device according to an embodiment of this application;
FIG. 9 is a schematic flowchart of another specific example of a method for storing data in a storage device according to an embodiment of this application;
FIG. 10 is a schematic flowchart of another specific example of a method for storing data in a storage device according to an embodiment of this application; and
FIG. 11 is a schematic diagram of a structure of a storage device according to an embodiment of this application.

### DESCRIPTION OF EMBODIMENTS

The following describes technical solutions in this application with reference to the accompanying drawings.

For ease of understanding, conventional technologies in this application are first described. It should be understood that this part is also included in the protection scope of this application.

A flash memory (flash memory, FLASH), referred to as a flash memory for short, is a non-volatile memory, to be specific, data is not lost when power is off, and the memory allows a plurality of times of erasing or writing in an operation. The flash memory is mainly used for general data storage and data exchange and transmission between a computer and another digital product like a storage card or a USB flash drive.

The flash memory can be classified into two types: a NAND-type (namely, a NAND flash) and a NOR-type (namely, a NOR flash). The two types of flash memories have different performance. The NAND flash has advantages such as a large capacity and a fast rewriting speed, and is applicable to storage of a large amount of data.

Optionally, the technical solutions provided in this application may be used in a storage device in which the NAND flash is used as a memory. For example, the storage device is a solid state disk (solid state drive or solid state disk, SSD) or a consumer storage product.

The following describes, by using a solid state disk, a consumer storage product, or the like as an example, a structure of a storage device to which the technical solutions in this application are applied.

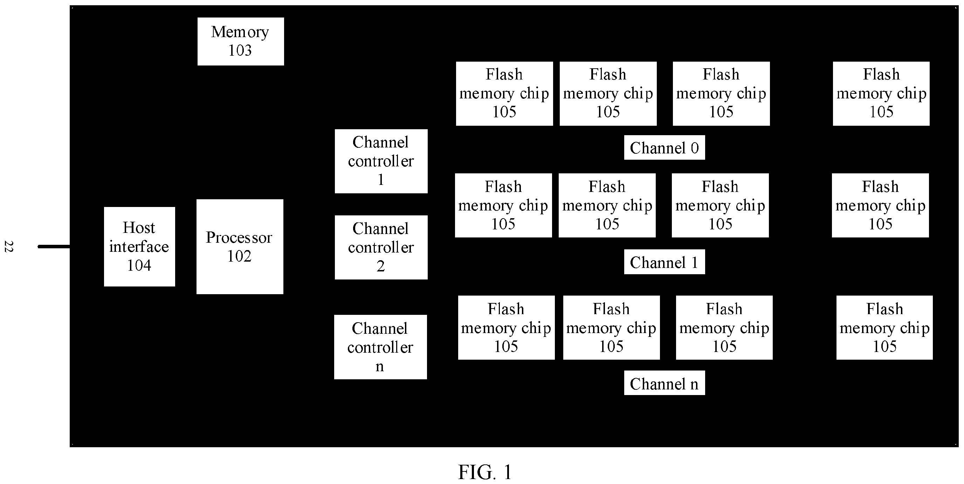

The solid state disk is a storage device that uses the NAND flash as a persistent storage. FIG. 1 is a schematic diagram of an example structure of a solid state disk SSD. An SSD 100 includes a NAND flash and a primary controller (primary controller for short) 101. The NAND flash includes a plurality of flash memory chips 105, and is configured to store data. The primary controller 101 is a brain center of the SSD, and is responsible for some complex tasks, such as managing data storage, and maintaining performance and a service life of the SSD. The primary controller 101 is an embedded microchip, and includes a processor 102. A function of the processor 102 is like a function of a command center, to be specific, sending all operation requests of the SSD. For example, the processor 102 may perform functions such as data reading/writing, garbage collection, and wear leveling by using firmware in a buffer.

The primary controller 101 of the SSD further includes a host interface 104 and several channel controllers. The host interface 104 is configured for communication with a host. The host herein may be any device like a server, a personal computer, or an array controller. The primary controller 101 may operate the plurality of flash memory chips 105 in parallel by using the several channel controllers, to improve bottom-layer bandwidth. For example, if there are eight channels between the primary controller 101 and the flash memory chips 105, the primary controller 101 reads and writes data to eight flash memory chips 105 in parallel through the eight channels.

In addition, the primary controller of the SSD may further include a random access memory (Random Access Memory, RAM). The RAM may be used as a temporary data storage medium of an operating system or another running program, and the RAM is volatile in data, in other words, data stored into the RAM is lost once power is off. Generally, the RAM may be used to temporarily store programs, data, and intermediate results.

Similar to the structure of the foregoing solid state disk, a consumer storage product may also use a NAND flash as a persistent storage, for example, a consumer solid state disk (consumer solid state drive or consumer solid state disk, cSSD) or a universal flash storage (universal flash storage, UFS). A requirement on power consumption is extremely high. There is a low power consumption mode for reducing power consumption.

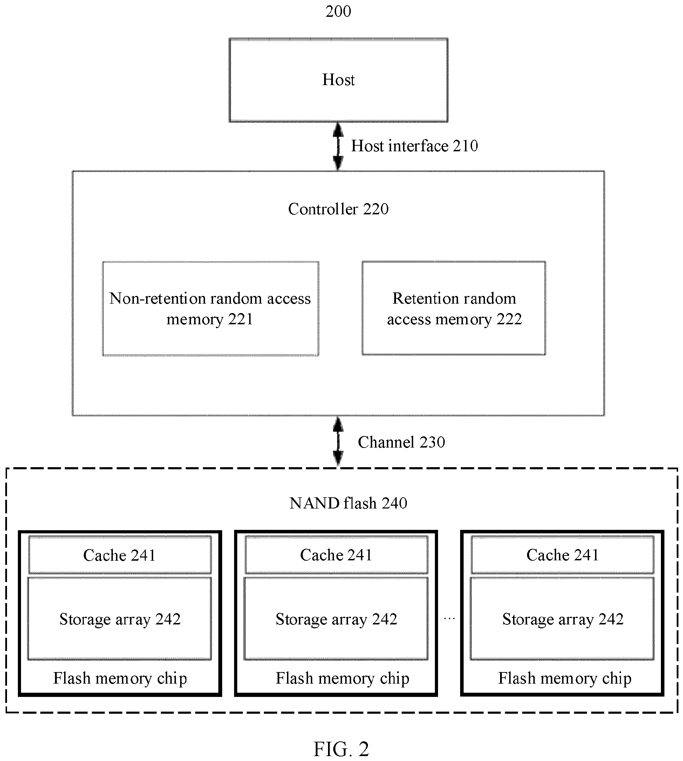

The following describes a structure of the consumer storage product with reference to FIG. 2. It should be noted that some components in FIG. 2 are the same as those in FIG. 1, and details are not described herein again.

FIG. 2 is a schematic diagram of a structure of a NAND flash-based consumer storage product. The storage product may also be referred to as a storage device. For ease of description, the following uses the storage device as an example for description. The storage device shown in FIG. 2 includes a host interface 210, a controller 220, a channel 230, and a NAND flash 240. The host interface 210 is configured for communication with a host. The controller 220 includes a non-retention random access memory 221, namely, a non-(retention random access memory, Retention RAM) and a retention random access memory (Retention RAM) 222. The NAND flash 240 includes a plurality of flash memory chips, and each flash memory chip includes a cache (NAND Cache) 241 and a storage array (NAND Array) 242. The cache 241 is a volatile memory, and the memory 242 is a non-volatile memory.

When the storage device shown in FIG. 2 is in a low power consumption mode, the non-retention RAM 221 in the controller is powered off, and the retention RAM 222 keeps power on. The retention RAM 222 is configured to store firmware and key running data, to ensure that the storage device can quickly exit the low power consumption mode.

It should be understood that the FW refers to a device "driver" stored in a device, and only by using the FW, an operating system can implement a running action of a specific machine according to a standard device driver.

Generally, to reduce power consumption of a storage device in a low power consumption mode, a size of a retention RAM needs to be controlled. A smaller retention RAM indicates lower power consumption of the storage device. However, a small retention RAM affects storage manners of the FW and key running data, and further affects performance of the storage device.

The following describes in detail, with reference to several examples, impact on the performance of the storage device when the retention RAM is small.

Example 1: Some data of a small amount, for example, data that is less than one page (Page) of data, may be referred to as temporary data (Temp data), and the storage device stores the Temp data into a NAND array. The Temp data may not be able to form a complete programming unit. For example, when the Temp data occupies only half of a programming unit, other data cannot be written into the other half of the programming unit. As a result, a waste of a write amount of the programming unit is caused.

Example 2: Because a flash memory chip can tolerate only specific read disturb counts (read disturb counts, RDC), the RDCs need to be recorded, that is, a corresponding entry is required to record the RDC. An entry for recording is stored in the retention RAM. A size of the entry is related to a recorded RDC granularity. A larger RDC granularity or a coarser RDC granularity indicates a smaller entry, that is, less content recorded in the entry. In this case, a storage device may trigger more processing actions, such as garbage collection (garbage collection, GC) and inspection. On the contrary, a smaller RDC granularity indicates a larger entry, that is, more detailed content recorded in the entry. In this case, the entry needs to occupy more storage space. When an RDC granularity is coarse, after a large quantity of processing actions are triggered, performance of a storage device, a write amount, and the like are affected. Therefore, the RDC granularity needs to be reduced, that is, an entry used for recording occupies large storage space. In other words, storage space of a retention RAM needs to be expanded.

Example 3: In a storage device, a same physical area may be in a triple-level cell mode (triple-level cell mode, TLC Mode) or a single-level cell mode (single-level cell mode, SLC Mode). In the TLC mode, more bit (bit) data may be stored, but performance is poor. In the SLC mode, less bit data may be stored, but performance is good. For use of the physical area, the storage device records a corresponding erase count (erase count, EC), and an entry recording the EC may be referred to as an EC table. When the recorded EC reaches a specific threshold, the physical area maintains use of the TLC, to ensure a requirement of a write amount. However, the EC table records total ECs in the TLC mode and SLC mode, and does not collect statistics separately. As a result, the SLC mode is switched to the TLC mode when ECs in the SLC mode do not reach the threshold. This shortens time for high-performance user experience. Therefore, a more detailed EC table is required for recording. That is, storage space occupied by the EC table needs to be further increased. Generally, the EC table is stored in the retention RAM, that is, when space of the retention RAM is small, user experience is affected.

Example 4: Because storage space of the retention RAM is small, when the storage device is in a low power consumption mode, FW code cannot be stored in the retention RAM in the low power consumption mode. Therefore, each time the storage device exits the low power consumption mode, a controller of the storage device needs to read the FW code from a NAND array. This causes duration of exiting the low power consumption mode by the storage device, that is, performance during exiting of the low power consumption mode is greatly affected.

This application provides a method for storing data in a storage device, to expand storage space of data in a low power consumption mode of the storage device, and improve performance of the storage device.

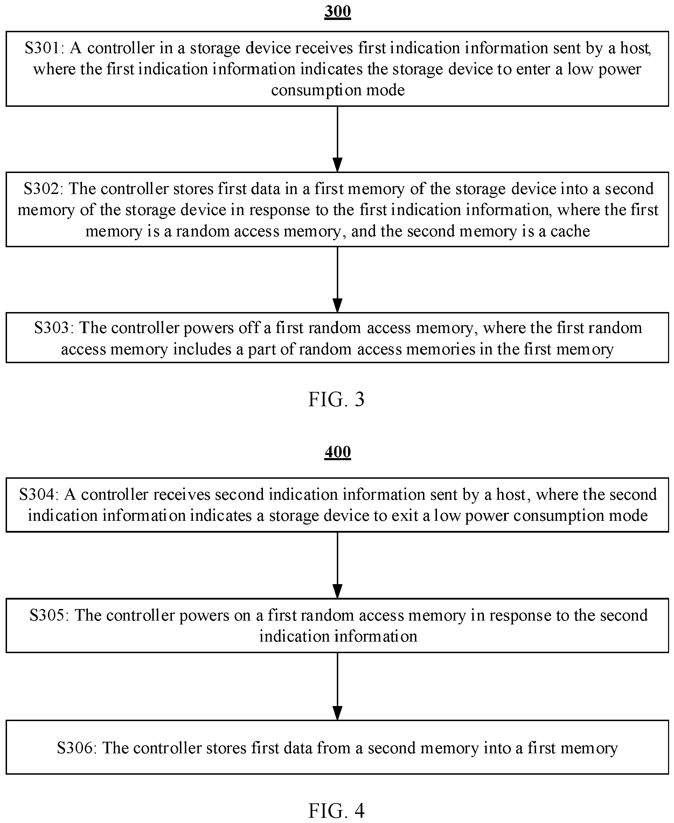

FIG. 3 is a schematic flowchart of a method for storing data in a storage device according to this application. The method 300 includes the following steps.

S301: A controller in the storage device receives first indication information sent by a host, where the first indication information indicates the storage device to enter a low power consumption mode.

In this embodiment of this application, the storage device includes the controller, a first memory, a second memory, and the like. Optionally, the first memory is included in the controller, is a random access memory, and is a volatile memory. The second memory is a cache (Cache), for example, a NAND cache.

It should be understood that, when the storage device is in the low power consumption mode, some units in the storage device need to be powered off, for example, some random access memories in the first memory are powered off, and the some random access memories may be referred to as a first random access memory.

Specifically, in this embodiment of this application, before the storage device enters the low power consumption mode, the controller of the storage device receives the first indication information sent by the host, to indicate the storage device to enter the low power consumption mode. After receiving the first indication information, the controller performs a series of operations, namely, the following steps. Optionally, step S301 may be referred to as starting to enter the low power consumption mode by the storage device.

S302: The controller stores first data in the first memory of the storage device into the second memory of the storage device in response to the first indication information, where the first memory is a random access memory, and the second memory is a cache.

Specifically, in this embodiment of this application, the controller stores the first data in the first memory of the storage device into the second memory in response to the first indication information. Optionally, the first memory may include a first random access memory and a second random access memory. The first data in the first memory may be first data in the first random access memory, or may be first data in the second random access memory, or may be first data in the first random access memory and the second random access memory. This is not limited in this application.

Optionally, the first random access memory is a non-retention RAM, the second random access memory is a retention RAM, and the second memory is a NAND cache.

It should be understood that the first random access memory and the second random access memory may be physically independent memories, or may be different storage units of a same memory. This is not limited in this application.

In this embodiment of this application, optionally, the first data includes data that changes and/or does not change in a running process of the storage device.

In this embodiment of this application, it should be understood that the moved first data may be determined by the controller according to a data processing policy stored in the storage device. For example, first data determined according to a data processing policy includes data that does not change in the running process of the storage device. For example, the first data is FW code (for example, extended FW code). For another example, first data determined according to a data processing policy includes data that changes in the running process of the storage device. For example, the first data is entry data.

In this embodiment of this application, optionally, before the controller stores the first data in the first memory into the second memory, the controller may perform error correction code (error correction code, ECC) encoding on the first data.

In a possible implementation, before the controller stores the first data in the first memory of the storage device into the second memory, the method may further include a step S1.

S1: The controller stores second data in the first memory into a third memory of the storage device, where the third memory is a non-volatile memory.

In this application, the storage device may further include the third memory. For example, the third memory is a NAND array.

Specifically, in this embodiment of this application, the controller may store the second data in the first memory into the third memory of the storage device according to a first data processing policy.

It should be understood that, in this embodiment of this application, the first memory includes a first random access memory and a second random access memory. Therefore, the second data in the first memory may be second data in the first random access memory, or may be second data in the second random access memory, or may be second data in the first random access memory and the second random access memory. This is not limited in this application.

In this embodiment of this application, optionally, the second data includes data that changes in the running process of the storage device, for example, entry data.

In this embodiment of this application, optionally, the second data is included in the first data. It should be understood that, when the first data includes the second data, same data is stored into both the second memory and the third memory, to avoid a case in which a data loss occurs when power supply to the second memory is unstable because the storage device is in the low power consumption mode.

In another possible implementation, the method may further include a step S2.

S2: The controller stores third data in the first random access memory of the storage device into a second random access memory, where the second random access memory is a part of random access memories in the first memory, and the second random access memory keeps power on in the low power consumption mode.

Specifically, in this embodiment of this application, the controller can store the third data in the first random access memory into the second random access memory according to a second data processing policy.

Optionally, the third data includes data that changes and/or does not change in a running process of the storage device, for example, FW code (for example, extended FW code), entry data, and Temp data.

It should be understood that in this embodiment of this application, the first data processing policy and the second data processing policy may be the same. In other words, the foregoing several possible implementations may be implemented in a combination. For example, the foregoing possible implementations may be implemented in a combination of step S302 and S 1. For another example, the foregoing possible implementations may be implemented in a combination of step S302 and S2. For another example, the foregoing possible implementations may be implemented in a combination of step S302, S1, and S2. This is not limited in this application.

S303: The controller powers off the first random access memory.

In this embodiment of this application, after related data is stored into a corresponding memory, the controller controls the storage device to enter the low power consumption mode, that is, powers off a memory that does not keep power on in the low power consumption mode. For example, the first random access memory is powered off.

Therefore, a method for storing data by using a cache is used when the storage device enters the low power consumption mode. This expands storage space of data in the low power consumption mode of the storage device, and improves performance of the storage device.

The foregoing describes the method for storing data in a storage device provided in this application, and specifically describes a series of operations when the storage device enters the low power consumption mode. Correspondingly, when the storage device exits the low power consumption mode, corresponding data may be moved back to an original storage position. The following describes a series of operations when the storage device exits the low power consumption mode with reference to steps S304 to S309.

It should be noted that, when the storage device exits the low power consumption mode, the corresponding data may not be moved back to the original storage position, that is, the corresponding data may be moved to a storage position different from the original storage position. This is not limited in this application.

It should be further noted that the following steps include a technical concept that is the same as that in the foregoing steps S301 to S303. For detailed descriptions of a specific meaning of the technical concept, refer to corresponding descriptions in the foregoing steps S301 to S303. Details are not described herein again.

Optionally, FIG. 4 is a schematic flowchart of another method 400 for storing data in a storage device according to this application. In other words, the method 300 may further include steps S304 to S306.

S304: The controller receives second indication information sent by the host, where the second indication information indicates the storage device to exit the low power consumption mode.

In this embodiment of this application, before exiting the low power consumption mode, the storage device receives the second indication information sent by the host, where the second indication information indicates the storage device to exit the low power consumption mode. The controller performs the following operations in response to the second indication information. Alternatively, step S304 may also be referred to as starting to exit the low power consumption mode by the storage device.

S305: The controller powers on the first random access memory in response to the second indication information.

In this embodiment of this application, when the storage device is in the low power consumption mode, the storage device needs to power off the first random access memory; and when the storage device exits the low power consumption mode, the storage device needs to power on the first random access memory.

S306: The controller stores the first data from the second memory into the first memory.

Specifically, in this embodiment of this application, when the storage device exits the low power consumption mode, corresponding data is moved back to an original position. In step S302, when the storage device enters the low power consumption mode, the first data in the first memory is stored into the second memory. Correspondingly, when the storage device exits the low power consumption mode, the first data may be moved from the second memory back to the first memory.

For detailed descriptions of the first data, the first memory, and the second memory in this step, refer to the detailed descriptions in step S302. Details are not described herein again.

Optionally, the controller may perform ECC decoding check on the first data, and when it is determined that the first data is correctable, the controller stores the first data from the second memory into the first memory. However, when it is determined that some or all data in the first data is uncorrectable, the controller may read corresponding data from the third memory, and store the corresponding data into the first memory. That is, the uncorrectable data is replaced. It should be understood that the uncorrectable data may be data that changes and/or does not change in a running process of the storage device. Optionally, the uncorrectable data may be the second data. In this case, the controller stores the second data from the third memory into the first memory.

It should be further understood that, when the storage device is in the low power consumption mode, some or all data in the first data may be stored into both the first memory and the third memory. For example, some or all data in the first data includes FW code. For another example, some or all data in the first data includes the second data.

Optionally, the method 300 may further include S307.

S307: The controller stores the third data from the second random access memory into the first random access memory

Corresponding to that in the foregoing step S3 in which the controller moves the third data from the first random access memory to the second random access memory, in step S307, the controller moves the third data from the second random access memory back to the first random access memory.

For detailed descriptions of the third data, the first random access memory, the second random access memory, and the like in this step, refer to the detailed descriptions in step S3. Details are not described herein again.

In a possible implementation, it may be set that a core power supply voltage (core power supply voltage) in the storage device keeps power on in a low power consumption mode. For example, a NAND Vcc keeps power on in a low power consumption mode. It should be understood that the NAND Vcc is used to supply power to a cache in the storage device, that is, the NAND Vcc may be understood as a power supply of the cache.

It should be understood that, in this application, the second memory and the third memory may be different units of a same memory. Alternatively, the second memory and the third memory are different memories that are physically independent of each other. This is not limited in this application.

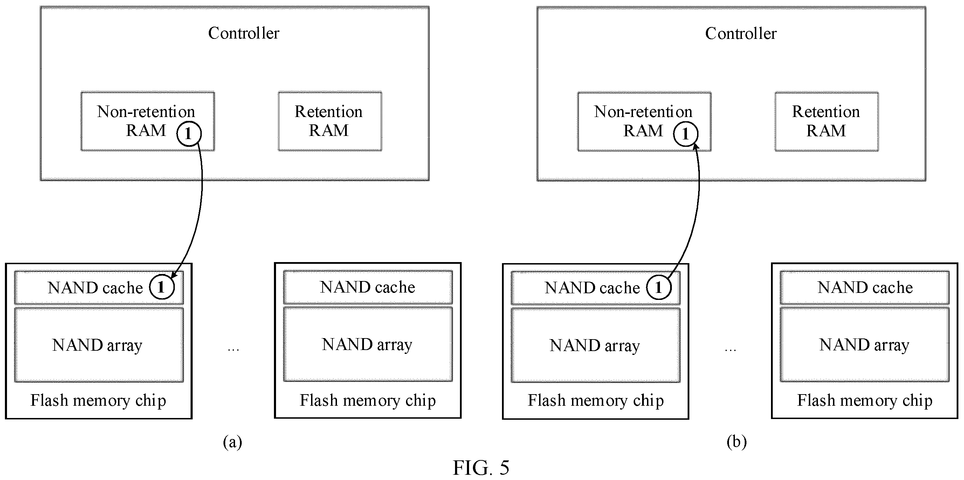

The following uses an example in which the first random access memory is a non-retention RAM, the second random access memory is a retention RAM, the second memory is a NAND cache, and the third memory is a NAND array, to describe in detail, with reference to FIG. 5 to FIG. 8, a method for storing data in a storage device provided in an embodiment of this application.

It should be noted that the following method includes a technical concept and steps that are the same as those in the foregoing method 300. For a specific meaning of the technical concept and detailed descriptions of the steps, refer to corresponding descriptions in the foregoing method 300. Details are not described herein again.

It should be further noted that, the following method relates only to a data storage step. For steps in which the controller receives the first indication information indicating the storage device to enter the low power consumption mode (S301), and powers off the first random access memory (S303) when the storage device enters the low power consumption mode, and steps in which the controller receives the second indication information indicating the storage device to exit the low power consumption mode (S304), and powers on the first random access memory (S305) when the storage device exits the low power consumption mode, refer to the detailed description in the foregoing method 300. Details are not described herein again. The following method describes only a plurality of specific embodiments corresponding to steps S302, S306, and S307 in the foregoing method 300.

FIG. 5 is a schematic flowchart of a specific example of a method for storing data in a storage device according to an embodiment of this application. (a) and (b) in FIG. 5 respectively show manners of storing or moving first data (a symbol ① indicates the first data) between a non-retention RAM and a NAND cache in the storage device when the storage device enters a low power consumption mode and exits the low power consumption mode.

As shown in (a) in FIG. 5, when the storage device enters the low power consumption mode, the controller stores the first data in the non-retention RAM into the NAND cache.

For a detailed operation when the storage device enters the low power consumption mode, refer to related descriptions of step S302 in the foregoing method 300. Details are not described herein again.

As shown in (b) in FIG. 5, when the storage device exits the low power consumption mode, the controller moves the first data from the NAND cache back to the non-retention RAM.

For a detailed operation when the storage device exits the low power consumption mode, refer to related descriptions of steps S306 and S307 in the foregoing method 300. Details are not described herein again.

Optionally, the first data includes data that changes in a running process of the storage device, for example, entry data or entry extension data. Alternatively, the first data includes data that does not change in the running process of the storage device, for example, FW code (for example, extended FW code).

It should be understood that, in this embodiment of this application, the method shown in FIG. 5 is applicable to a case in which power supply to both the retention RAM and the NAND cache is stable when the storage device is in the low power consumption mode.

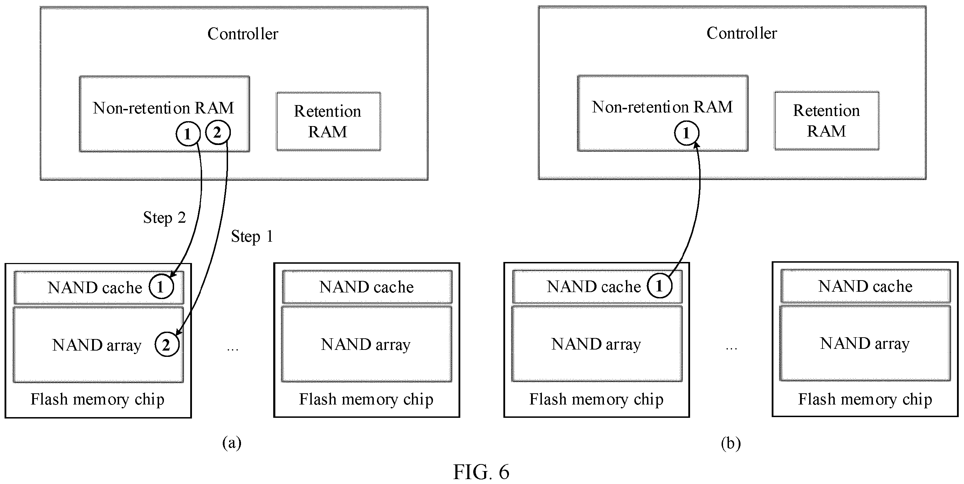

FIG. 6 is a schematic flowchart of another specific example of a method for storing data in a storage device according to an embodiment of this application. (a) and (b) in FIG. 6 are respectively manners of storing or moving first data (a symbol ① indicates the first data) and second data (a symbol ② indicates the second data) between a non-retention RAM and each of a NAND cache and a NAND array in the storage device when the storage device enters a low power consumption mode and exits the low power consumption mode.

As shown in (a) in FIG. 6, when the storage device enters the low power consumption mode, the following steps are included.

Step 1: A controller stores the second data in the non-retention RAM into the NAND array.

Step 2: The controller stores the first data in the non-retention RAM into the NAND cache.

For a detailed operation when the storage device enters the low power consumption mode, refer to related descriptions of step S302 in the foregoing method 300. Details are not described herein again.

As shown in (b) in FIG. 6, when the storage device exits the low power consumption mode, the controller moves the first data from the NAND cache back to the non-retention RAM.

For a detailed operation when the storage device exits the low power consumption mode, refer to related descriptions of steps S306 and S307 in the foregoing method 300. Details are not described herein again.

It should be understood that, in this embodiment of this application, optionally, the first data includes the second data. Therefore, when the low power consumption mode is exited, only the first data needs to be moved.

It should be further understood that, in this embodiment of this application, the solution described in FIG. 6 is applicable to a case in which power supply to the retention RAM is stable, and power supply to the NAND cache is not necessarily stable when the storage device is in the low power consumption mode. Therefore, when data is lost due to unstable power supply to the NAND cache, the corresponding data may be read from the NAND array, to avoid a data loss.

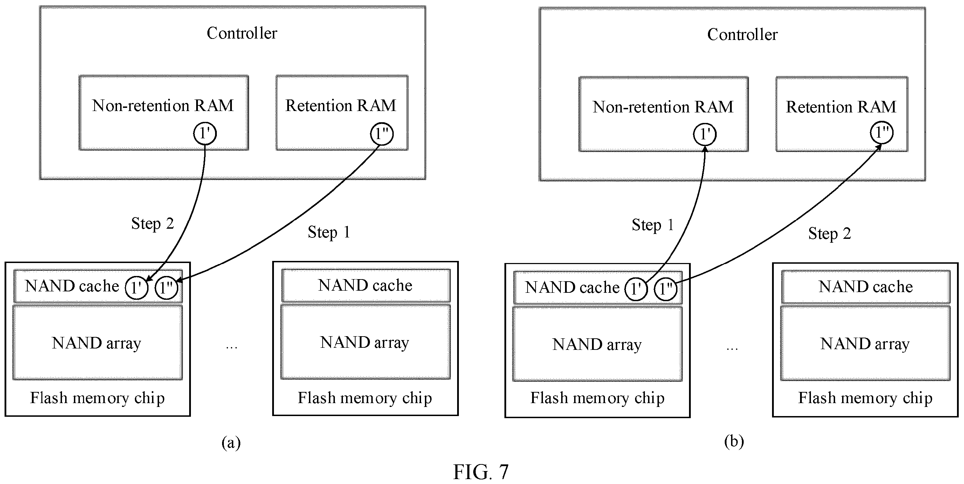

FIG. 7 is a schematic flowchart of another specific example of a method for storing data in a storage device according to an embodiment of this application. (a) and (b) in FIG. 7 are respectively manners of storing or moving first data (a symbol ① indicates the first data) between a NAND cache and each of a non-retention RAM and a retention RAM in the storage device when the storage device enters a low power consumption mode and exits the low power consumption mode.

As shown in (a) in FIG. 7, when the storage device enters the low power consumption mode, the following steps are included.

Step 1: A controller stores first data in the retention RAM into the NAND cache.

Step 2: The controller stores first data in the non-retention RAM into the NAND cache.

For a detailed operation when the storage device enters the low power consumption mode, refer to related descriptions of step S302 in the foregoing method 300. Details are not described herein again.

As shown in (b) in FIG. 7, when the storage device exits the low power consumption, the following steps are included.

Step 1: The controller moves the first data from the NAND cache back to the non-retention RAM.

Step 2: The controller moves the first data from the NAND cache back to the retention RAM.

For a detailed operation when the storage device exits the low power consumption mode, refer to related descriptions of steps S306 and S307 in the foregoing method 300. Details are not described herein again.

Optionally, the first data includes data that changes in a running process of the storage device, for example, entry data.

It should be understood that, in this embodiment of this application, the solution shown in FIG. 7 is applicable to a case in which power supply to the retention RAM is not necessarily stable, and power supply to the NAND cache is stable when the storage device is in the low power consumption mode. Therefore, when data is lost due to unstable power supply to the retention RAM, the corresponding data may be read from the NAND cache, to avoid a data loss.

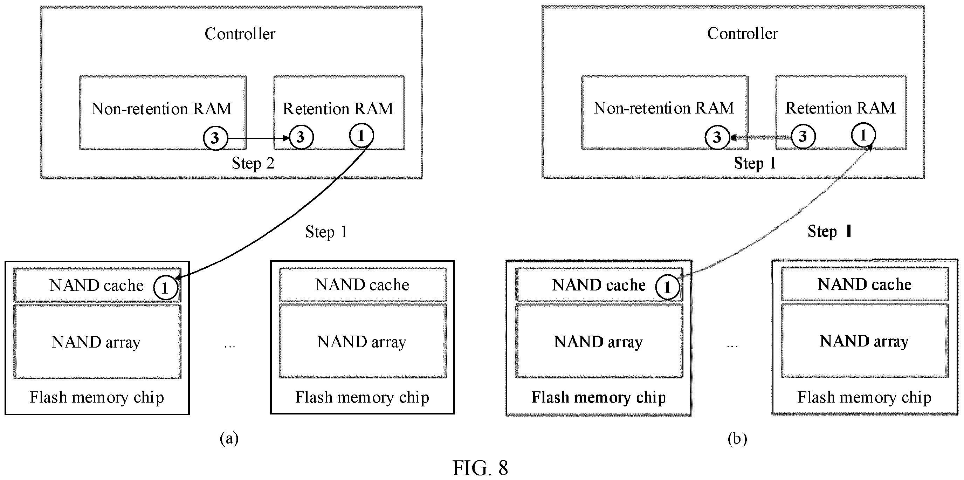

FIG. 8 is a schematic flowchart of another specific example of a method for storing data in a storage device according to an embodiment of this application. (a) and (b) in FIG. 8 are respectively manners of storing or moving first data (a symbol ① indicates the first data) and third data (a symbol (3) indicates the third data) between a retention RAM and a non-retention RAM, and between the retention RAM and a NAND cache in the storage device when the storage device enters a low power consumption mode and exits the low power consumption mode.

As shown in (a) in FIG. 8, when the storage device enters the low power consumption mode, the following steps are included.

Step 1: A controller stores the first data in the retention RAM into the NAND cache.

Step 2: The controller stores the third data in the non-retention RAM into the retention RAM.

For a detailed operation when the storage device enters the low power consumption mode, refer to related descriptions of step S302 in the foregoing method 300. Details are not described herein again.

As shown in (b) in FIG. 8, when the storage device exits the low power consumption, the following steps are included.

Step 1: The controller moves the third data from the retention RAM back to the non-retention RAM.

Step 2: The controller moves the first data from the NAND cache back to the retention RAM.

For a detailed operation when the storage device exits the low power consumption mode, refer to related descriptions of steps S306 and S307 in the foregoing method 300. Details are not described herein again.

Optionally, the first data includes data that does not change in a running process of the storage device, for example, FW code, and the third data includes data that does not change and that changes in a running process of the storage device, for example, FW code and entry data.

It should be understood that, in this embodiment of this application, the solution described in FIG. 8 is applicable to a case in which power supply to the retention RAM is stable, and power supply to the NAND cache is not necessarily stable when the storage device is in the low power consumption mode. The first data is stored from the retention RAM into the NAND cache, to reserve storage space for the third data. Then, the third data is stored into the retention RAM with stable power supply, instead of being stored into the NAND cache with unstable power supply, to avoid a data loss.

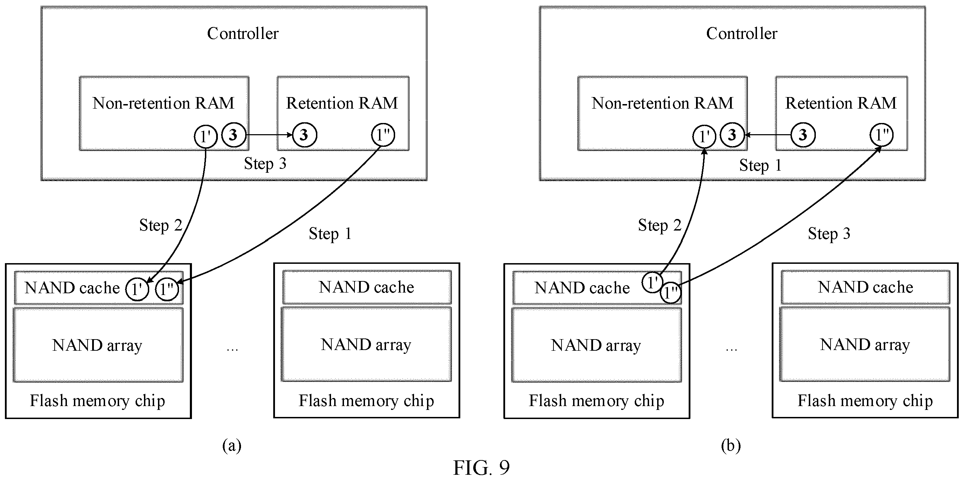

FIG. 9 is a schematic flowchart of another specific example of a method for storing data in a storage device according to an embodiment of this application. (a) and (b) in FIG. 9 are respectively manners of storing or moving first data (a symbol ① indicates the first data) and third data (a symbol (3) indicates the third data) between a NAND cache and each of a non-retention RAM and a retention RAM, and between the non-retention RAM and the retention RAM in the storage device when the storage device enters a low power consumption mode and exits the low power consumption mode.

As shown in (a) in FIG. 9, when the storage device enters the low power consumption mode, the following steps are included.

Step 1: A controller stores first data in the retention RAM into the NAND cache.

Step 2: The controller stores first data in the non-retention RAM into the NAND cache.

Step 3: The controller stores the third data in the non-retention RAM into the retention RAM.

For a detailed operation when the storage device enters the low power consumption mode, refer to related descriptions of step S302 in the foregoing method 300. Details are not described herein again.

As shown in (b) in FIG. 9, when the storage device exits the low power consumption, the following steps are included.

Step 1: The controller moves the third data from the retention RAM back to the non-retention RAM.

Step 2: The controller moves the first data from the NAND cache back to the non-retention RAM.

Step 3: The controller migrates the first data from the NAND cache back to the retention RAM.

For a detailed operation when the storage device exits the low power consumption mode, refer to related descriptions of steps S306 and S307 in the foregoing method 300. Details are not described herein again.

Optionally, the first data includes data that does not change in a running process of the storage device, for example, FW code, and the third data includes data that changes in a running process of the storage device, for example, entry data.

It should be understood that, in this embodiment of this application, the solution described in FIG. 9 is applicable to a case in which power supply to the retention RAM is stable, and power supply to the NAND cache is not necessarily stable when the storage device is in the low power consumption mode. The first data is stored from the non-retention RAM and the retention RAM into the NAND cache, to reserve storage space for the third data. Then, the third data is stored into the retention RAM with stable power supply, instead of being stored into the NAND cache with unstable power supply, to avoid a data loss.

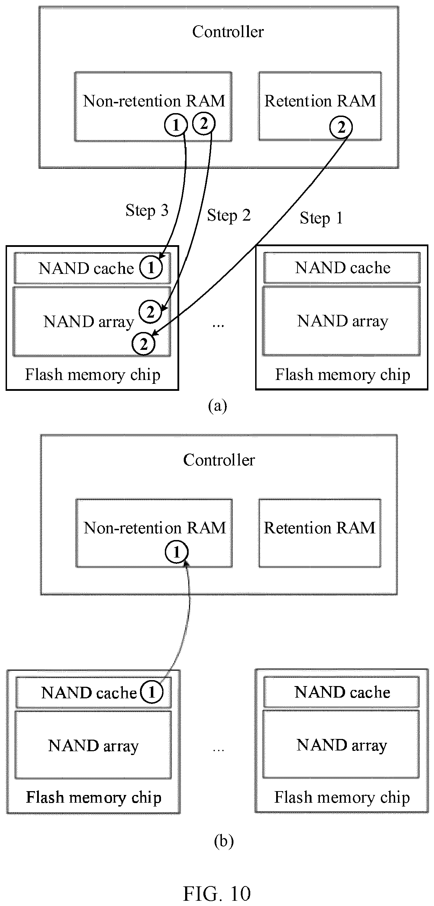

FIG. 10 is a schematic flowchart of another specific example of a method for storing data in a storage device according to an embodiment of this application. (a) and (b) in FIG. 10 are respectively manners of storing or moving first data (a symbol ① indicates the first data) and second data (a symbol ② indicates the second data) between a non-retention RAM and a NAND cache, and between a NAND array and each of the non-retention RAM and a retention RAM in the storage device when the storage device enters a low power consumption mode and exits the low power consumption mode.

As shown in (a) in FIG. 10, when the storage device enters the low power consumption mode, the following steps are included.

Step 1: A controller stores second data in the retention RAM into the NAND array.

Step 2: The controller stores second data in the non-retention RAM into the NAND array.

Step 3: The controller stores the first data in the non-retention RAM into the NAND cache.

For a detailed operation when the storage device enters the low power consumption mode, refer to related descriptions of step S302 in the foregoing method 300. Details are not described herein again.

As shown in (b) in FIG. 10, when the storage device exits the low power consumption mode, the controller moves the first data from the NAND cache back to the non-retention RAM.

For a detailed operation when the storage device exits the low power consumption mode, refer to related descriptions of steps S306 and S307 in the foregoing method 300. Details are not described herein again.

Optionally, the first data includes data that does not change in a running process of the storage device, for example, FW code, and the second data includes data that changes in a running process of the storage device, for example, entry data.

It should be understood that, in this embodiment of this application, the solution shown in FIG. 10 is applicable to a case in which power supply to the retention RAM is not necessarily stable, and power supply to the NAND cache is also not necessarily stable when the storage device is in the low power consumption mode. The second data is stored from the non-retention RAM and the retention RAM into the NAND array, to avoid a loss of the second data caused due to unstable power supply to the retention RAM and the NAND cache.

It should be understood that, in this application, "store" and "move" have a same meaning, and the two may be replaced with each other. Similarly, "store into" and "move back to" may also express a same meaning, and the two may be replaced with each other.

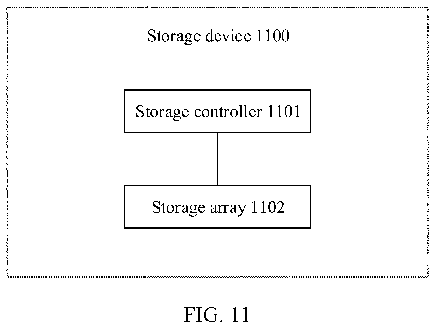

The methods provided in embodiments of this application are described above in detail with reference to FIG. 3 to FIG. 10. The following describes in detail an apparatus, namely, a storage device, provided in an embodiment of this application with reference to FIG. 11. It should be understood that descriptions of apparatus embodiments correspond to descriptions of method embodiments. Therefore, for content not described in detail, refer to the foregoing method embodiments. For brevity, details are not described herein again.

FIG. 11 is a schematic diagram of a structure of a storage device according to an embodiment of this application. A storage device 1101 includes a storage controller 1101 and a storage array 1102. Optionally, the storage controller 1101 includes a first memory, the first memory may further include a first random access memory, and the storage array 1102 includes a second memory.

The storage controller 1101 is configured to implement a corresponding operation in the foregoing method embodiment.

Specifically, the storage controller 1101 is configured to receive first indication information sent by a host, where the first indication information indicates the storage device to enter a low power consumption mode. The storage controller 1101 is further configured to store first data in a first memory into a second memory in response to the first indication information, where the first memory is a random access memory, and the second memory is a cache. The storage controller 1101 is further configured to power off the first random access memory.

It should be understood that, in this application, optionally, the first memory may be disposed in another area of the storage device, but is not disposed in the storage controller. This is not limited in this application. It should be further understood that in this application, the storage array may be referred to as a storage area, and the storage array and the storage area may be replaced with each other. This is not limited in this application.

In a possible implementation, the storage controller 1101 is further configured to receive second indication information sent by the host, where the second indication information indicates the storage device to exit the low power consumption mode. The storage controller 1101 is further configured to: power on the first random access memory in response to the second indication information, and store the first data from the second memory into the first memory.

For detailed function descriptions of the foregoing storage device, refer to corresponding descriptions in the foregoing method embodiments. Details are not described herein again.

An embodiment of this application further provides a computer-readable storage medium, where the computer-readable storage medium stores computer instructions used to implement the method performed by the controller of the storage device in the foregoing method embodiments. For example, when the computer instructions are executed, the storage device can implement the method performed by the controller in the foregoing method embodiments.

An embodiment of this application may further provide a computer program product including instructions. When the instructions are executed, a storage device implements the method performed by the controller in the foregoing method embodiment.

An embodiment of this application further provides a system. The system includes the controller and one or more memories in the foregoing embodiments.

It may be clearly understood by a person skilled in the art that, for the purpose of convenient and brief description, for explanation and beneficial effects of related content in any apparatus provided above, refer to the corresponding method embodiment provided above. Details are not described herein again.

A specific structure of an execution body of the method provided in embodiments of this application is not particularly limited in this embodiment of this application, provided that communication can be performed according to the method provided in embodiments of this application by running a program that records code of the method provided in embodiments of this application. For example, the method provided in this embodiment of this application may be executed by a controller, or a function module that is in a device and that can invoke and execute a program.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should further be noted that the memory described in this specification aims to include but is not limited to these memories and any memory of another proper type.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for storing data in a storage device, comprising:
receiving, by a controller in the storage device, first indication information sent by a host, wherein the first indication information indicates the storage device to enter a low power consumption mode;
storing, by the controller, first data in a first memory of the storage device into a second memory of the storage device in response to the first indication information, wherein the first memory is a random access memory, and the second memory is a cache; and
powering off, by the controller, a first random access memory, wherein the first random access memory is a part of random access memories in the first memory.

2. The method according to claim 1, wherein before the storing, by the controller, first data in a first memory of the storage device into a second memory of the storage device, the method further comprises:
storing, by the controller, second data in the first memory into a third memory of the storage device, wherein the third memory is a non-volatile memory.

3. The method according to claim 1 or 2, wherein the method further comprises:
storing, by the controller, third data in the first random access memory into a second random access memory, wherein the second random access memory is a part of random access memories in the first memory, and the second random access memory keeps power on when the storage device is in the low power consumption mode.

4. The method according to any one of claims 1 to 3, wherein before the storing, by the controller, first data in a first memory of the storage device into a second memory of the storage device, the method further comprises:
performing, by the controller, error correction code ECC encoding on the first data.

5. The method according to any one of claims 1 to 4, wherein the method further comprises:
receiving, by the controller, second indication information sent by the host, wherein the second indication information indicates the storage device to exit the low power consumption mode;
powering on, by the controller, the first random access memory in response to the second indication information; and
storing, by the controller, the first data from the second memory into the first memory.

6. The method according to claim 5, wherein the storing, by the controller, the first data from the second memory into the first memory comprises:
performing, by the controller, ECC decoding check on the first data; and
when the first data is correctable, storing, by the controller, the first data from the second memory into the first memory.

7. The method according to claim 5 or 6, wherein the method further comprises:
storing, by the controller, the third data from the second random access memory into the first random access memory.

8. The method according to any one of claims 2 to 7, wherein the second memory and the third memory are different units of a same memory.

9. The method according to any one of claims 1 to 8, wherein the first data comprises data that changes in a running process of the storage device and/or that does not change in the running process of the storage device.

10. The method according to any one of claims 1 to 9, wherein the second data comprises data that changes in the running process of the storage device.

11. The method according to any one of claims 1 to 10, wherein the third data comprises data that changes in the running process of the storage device and/or that does not change in the running process of the storage device.

12. A storage device, wherein the storage device comprises a storage controller and a storage array, and specifically comprises:
the storage controller, configured to receive first indication information sent by a host, wherein the first indication information indicates the storage device to enter a low power consumption mode;
the storage controller, further configured to store first data in a first memory of the storage controller into a second memory of the storage array in response to the first indication information, wherein the first memory is a random access memory, and the second memory is a cache; and
the storage controller, further configured to power off a first random access memory, wherein the first random access memory is a part of random access memories in the first memory.

13. The storage device according to claim 12, wherein the storage array further comprises a third memory, and before the storage controller stores the first data in the first memory of the storage controller into the second memory of the storage array, the storage controller is further configured to:
store second data in the first memory into the third memory, wherein the third memory is a non-volatile memory.

14. The storage device according to claim 12 or 13, wherein the storage controller is further configured to store third data in the first random access memory into a second random access memory, wherein the second random access memory is a part of random access memories in the first memory, and the second random access memory keeps power on when the storage device is in the low power consumption mode.

15. The storage device according to any one of claims 12 to 14, wherein before the storage controller stores the first data in the first memory of the storage controller into the second memory of the storage array, the storage controller is further configured to:
perform error correction code ECC encoding on the first data.

16. The storage device according to any one of claims 12 to 15, comprising:
the storage controller, further configured to receive second indication information sent by the host, wherein the second indication information indicates the storage device to exit the low power consumption mode;
the storage controller, further configured to power on the first random access memory in response to the second indication information; and
the storage controller, further configured to store the first data from the second memory into the first memory.

17. The storage device according to claim 16, wherein the storage controller is further configured to store the first data from the second memory into the first memory, and the storage controller is specifically configured to:
perform ECC decoding check on the first data; and
store the first data from the second memory into the first memory.

18. The storage device according to claim 16 or 17, wherein the storage controller is further configured to store the third data from the second random access memory into the first random access memory.

19. The storage device according to any one of claims 13 to 18, wherein the second memory and the third memory are different units of a same memory.

20. The storage device according to any one of claims 12 to 19, wherein the first data comprises data that changes in a running process of the storage device and/or that does not change in the running process of the storage device.

21. The storage device according to any one of claims 12 to 20, wherein the second data comprises data that changes in the running process of the storage device.

22. The storage device according to any one of claims 12 to 21, wherein the third data comprises data that changes in the running process of the storage device and/or that does not change in the running process of the storage device.

23. A computer-readable storage medium, wherein the computer-readable storage medium stores computer instructions, and when the computer instructions are run, the method according to any one of claims 1 to 11 is performed.
